(19) Europäisches Patentamt
European Patent Office
Office européen des brevets

(11) **EP 4 428 832 A1**

(12) **EUROPEAN PATENT APPLICATION**

(43) Date of publication:
**11.09.2024  Bulletin 2024/37**

(21) Application number: **24157687.5**

(22) Date of filing: **14.02.2024**

(51) International Patent Classification (IPC):
**G06V 10/84** (2022.01)     **G06V 20/52** (2022.01)

(52) Cooperative Patent Classification (CPC):
**G06V 20/52; G06V 10/84**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2023  GB 202303410**

(71) Applicant: **Milestone Systems A/S
2605 Brøndby (DK)**

(72) Inventor: **SIEMON, Mia
2605 Brøndby (DK)**

(74) Representative: **Canon Europe Limited
European Intellectual Property Group
4 Roundwood Avenue
Stockley Park
Uxbridge UB11 1AF (GB)**

(54) **VIDEO ANOMALY DETECTION**

(57) The invention provides a computer implemented method of Video Anomaly Detection, VAD, the method comprising: detecting and tracking at least one object of interest across consecutive frames of video surveillance data; performing VAD using a Probabilistic Graphical Model, PGM, based on the said at least one object that has been detected and tracked.

S200

Detecting and tracking at least one object of interest across consecutive frames of video surveillance data

S210

Performing Video Anomaly Detection, VAD, using a Probabilistic Graphical Model, PGM, based on the said at least one object that has been detected and tracked

FIGURE 2

EP 4 428 832 A1

**Description**

Technical field of the Invention

The present invention relates to a video processing apparatus, a video surveillance system, a computer implemented method, a computer program and storage medium comprising such a program, for performing Video Anomaly Detection (VAD).

Background of the Invention

Surveillance systems are typically arranged to monitor surveillance data received from a plurality of data capture devices. A viewer may be overwhelmed by large quantities of data captured by a plurality of cameras. If the viewer is presented with video data from all of the cameras, then the viewer will not know which of the cameras requires the most attention. Conversely, if the viewer is presented with video data from only one of the cameras, then the viewer may miss an event that is observed by another of the cameras.

An assessment needs to be made of how to allocate resources so that that the most important surveillance data is viewed and/or recorded. For video data that is presented live, presenting the most important information assists the viewer in deciding actions that need to be taken, at the most appropriate time. For video data that is recorded, storing and retrieving the most important information assists the viewer in understanding events that have previously occurred. Providing an alert to identify important information ensures that the viewer is provided with the appropriate context in order to assess whether captured surveillance data requires further attention.

The identification of whether information is important is typically made by the viewer, although the viewer can be assisted by the alert identifying that the information could be important. Typically, the viewer is interested to view video data that depicts the motion of objects that are of particular interest, such as people or vehicles.

VAD, in the field of computer vision (CV), also referred to as abnormal event detection, abnormality detection or outlier detection is the identification of rare events in data. When applied to computer vision this concerns the detection of abnormal behaviour in amongst other things people, crowds and traffic. With the ability to automatically determine if footage is relevant or irrelevant through anomaly detection, this amount of footage could be greatly reduced and could potentially allow for live investigation of the surveillance. This could result in emergency personal receiving notice of a traffic accident before it is called in by bystanders, care takers to know if an elderly has fallen down or police to be aware of an escalating situation requiring their intercession.

For safety and security reasons, automated VAD systems are of particular interest in video surveillance setups. Whilst mostly targeted by means of innovative Deep Learning (DL) based solution proposals, their accuracies, however, are yet far from those achieved on other prevalent image processing tasks such as image classification, for example, which holds in particular with respect to the high performance variance observed across different available VAD datasets.

Furthermore, existing VAD systems and methods are often complex in nature, opaque in the way they reach conclusions. They further require a lot of training data and may be difficult to retrain as a consequence.

Thus, there is a general need to develop new apparatuses, systems, methods, computer programs and storage media for performing VAD.

Summary of the Invention

The present invention addresses at least some of the above-mentioned issues.

The invention provides a computer implemented method of VAD, according to claims 1 to 18.

The invention further provides a computer program according to claim 19.

The invention further provides a video processing apparatus according to claims 20 to 25.

Aspects of the present invention are set out by the independent claims and preferred features of the invention are set out in the dependent claims.

In particular, the invention achieves the aim of performing VAD thanks to an object-centric design to anomaly detection and a Probabilistic Graphical Model (PGM). The PGM introduces a significant degree of freedom in its semantic driven modelling process without requiring domain-specific knowledge in Deep Learning (DL).

PGMs are particularly recognized for one key property they exhibit: they are based on the concept of declarative representation which means that knowledge and reasoning are kept completely separate. The consequence is a modelling framework which comes with a variety of different graphical network structures in which knowledge can be represented with its own clear semantics, and a set of optimization algorithms to conduct inference in the most efficient way for the definitive task at hand. Within the context of VAD, in which limitations in our ability to define what is normal or not, it appears very intuitive to model observations which can be made in the world by means of uncertainties while exploiting the field of conditional probability theory. Further, common challenges in video recording setups imposed by varying camera perspectives can be addressed with the highly sophisticated modelling flexibility facilitated by all the graph structures given in the domain of PGMs.

Additional features of the present invention will become apparent from the following description of embodiments with reference to the attached drawings.

Brief description of the drawings

Embodiments of the present invention will now be described, by way of example only, with reference to the accompanying drawings in which:

Figure 1 shows a video surveillance system in which the present invention can be implemented;

Figure 2 is a flowchart illustrating the two main steps of the computer implemented method according to the invention.

Figure 3 illustrates a pipeline for VAD.

Figures 4A/4B illustrate two proposed network structures to model conditional relations between different variables that may be used for VAD.

Figures 4C/4D respectively illustrate two variants of the network structures of Figures 4A/4B.

Figure 5A/5B show the result of training the PGM based on a whole box approach and bottom border approach, respectively.

Figures 6A/6B/6C show qualitative results for test frames extracted from CUHK Avenue, ShanghaiTech and StreetScene.

Figure 7 is a table showing quantitative results for CUHK Avenue, ShanghaiTech and StreetScene.

Figure 8 illustrates the effect achieved by the extension of a network structure which targets appearance-based anomalies to temporal ones.

Figures 9A to 9F illustrate examples of visualizations of an anomaly in video management software and corresponding explanations of detection results.

Detailed Description of the Invention

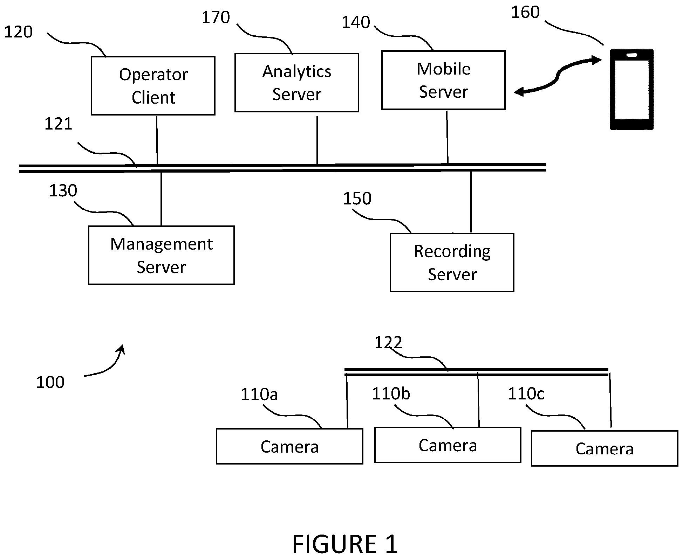

Figure 1 shows an example of a video surveillance system 100 in which embodiments of the invention can be implemented. The system 100 comprises a management server 130, a recording server 150, an analytics server 170 and a mobile server 140, which collectively may be referred to as a video management system. Further servers may also be included in the video management system, such as further recording servers or archive servers. A plurality of video surveillance cameras 110a, 110b, 110c send video surveillance data to the recording server 150. An operator client 120 is a fixed terminal which provides an interface via which an operator can view video data live from the cameras 110a, 110b, 110c, and/or recorded video data from the recording server 150.

The cameras 110a, 110b, 110c capture image data and send this to the recording server 150 as a plurality of video data streams.

The recording server 150 stores the video data streams captured by the video cameras 1 10a, 110b, 110c. Video data is streamed from the recording server 150 to the operator client 120 depending on which live streams or recorded streams are selected by an operator to be viewed.

The mobile server 140 communicates with a user-device 160 which is a mobile device such as a smartphone or tablet which has a touch screen display. The user device 160 can access the system from a browser using a web client or a mobile client. Via the user device 160 and the mobile server 140, a user can view recorded video data stored on the recording server 150. The user can also view a live feed via the user device 160.

The analytics server 170 can run analytics software for image analysis, for example motion or object detection, facial recognition, event detection. The analytics server 170 may generate metadata which is added to the video data and which describes objects which are identified in the video data.

Other servers may also be present in the system 100. For example, an archiving server (not illustrated) may be provided for archiving older data stored in the recording server 150 which does not need to be immediately accessible from the recording server 150, but which it is not desired to be deleted permanently. A failover recording server (not illustrated) may be provided in case a main recording server fails.

The operator client 120, the analytics server 170 and the mobile server 140 are configured to communicate via a first network/bus 121 with the management server 130 and the recording server 150. The recording server 150 communicates with the cameras 110a, 110b, 110c via a second network/bus 122.

The management server 130 includes video management software (VMS) for managing information regarding the configuration of the surveillance/monitoring system 100 such as conditions for alarms, details of attached peripheral devices (hardware), which data streams are recorded in which recording server, etc.. The management server 130 also manages user information such as operator permissions. When an operator client 120 is connected to the system, or a user logs in, the management server 130 determines if the user is authorised to view video data. The management server 130 also initiates an initialisation or set-up procedure during which the management server 130 sends configuration data to the operator client 120. The configuration data defines the cameras in the system, and which recording server (if there are multiple recording servers) each camera is connected to. The operator client 120 then stores the configuration data in a cache. The configuration data comprises the information necessary for the operator client 120 to identify cameras and obtain data from cameras and/or recording servers.

Object detection/recognition can be applied to the video data by object detection/recognition software running on the analytics server 170. The object detection/recognition software preferably generates metadata which is associated with the video stream and defines where in a frame an object has been detected. The metadata may also define what type of object has been detected e.g. person, car, dog, bicycle, and/or characteristics of the object (e.g. colour, speed of movement etc). Other types of video analytics software can also generate metadata, such as licence plate recognition, or facial recognition.

Object detection/recognition software, may be run on the analytics server 170, but some cameras can also carry out object detection/recognition and generate metadata, which is included in the stream of video surveillance data sent to the recording server 150. Therefore, metadata from video analytics can be generated in the camera, in the analytics server 170 or both. It is not essential to the present invention where the metadata is generated. The metadata may be stored in the recording server 150 with the video data, and transferred to the operator client 120 with or without its associated video data.

The video surveillance system of Figure 1 is an example of a system in which the present invention can be implemented. However, other architectures are possible. For example, the system of Figure 1 is an "on premises" system, but the present invention can also be implemented in a cloud based system. In a cloud based system, the cameras stream data to the cloud, and at least the recording server 150 is in the cloud. Video analytics may be carried out at the camera, and/or in the cloud. The operator client 120 or mobile client 160 requests the video data to be viewed by the user from the cloud.

A search facility of the operator client 120 may allow a user to look for a specific object or combination of object by searching metadata. Metadata generated by video analytics such as object detection/recognition discussed above can allow a user to search for specific objects or combinations of objects (e.g. white van or man wearing a red baseball cap, or a red car and a bus in the same frame, or a particular license plate or face). The operator client 120 or the mobile client 160 will receive user input of at least one search criterion, and generate a search query.

A search can then be carried out for metadata matching the search query. The search software then sends a request to extract image data from the recording server 150 corresponding to portions of the video data having metadata matching the search query, based on the timestamp of the video data. This extracted image data is then received by the operator client 120 or mobile client 160 and presented to the user at the operator client 120 or mobile client 160 as search results, typically in the form of a plurality of thumbnail images, wherein the user can click on each thumbnail image to view a video clip that includes the object or activity.

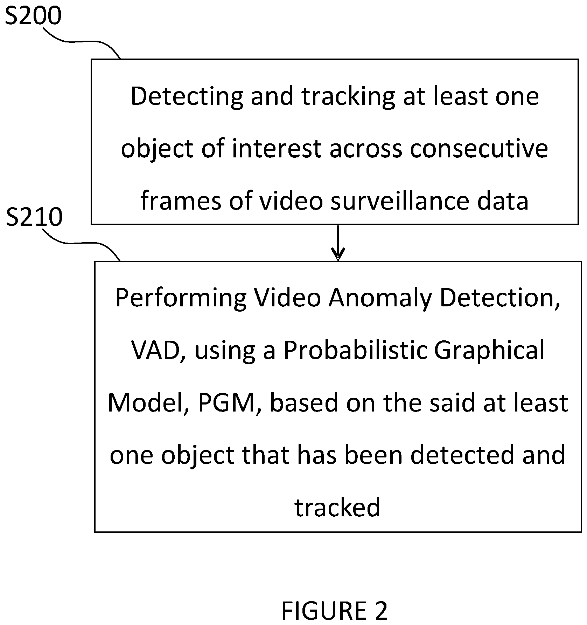

Figure 2 is a flowchart illustrating the steps of the computer implemented method of VAD.

In a step S200, at least one object of interest is detected and tracked across consecutive frames of video surveillance data according to any known method.

Such detecting and tracking may comprise performing multi-object tracking, MOT, for instance using an off-the-shelf multi-class object tracker such as Bot-SORT (Nir Aharon, Roy Orfaig, and Ben-Zion Bobrovsky. Botsort: Robust associations multi-pedestrian tracking. arXiv preprint arXiv:2206.14651, 2022.). This tracker allows to perform two crucial CV tasks: object detection together with object re-identification across consecutive frames. This facilitates the subsequent creation of a VAD model comprising spatial and temporal dimensions. The temporal dimension is of particular importance when it comes to addressing the detection of anomalies that are considered due to their deviating visual/spatial appearance, whilst the temporal dimension is used to capture anomalies which are temporal in nature.

Preferably, performing MOT comprises generating and/or outputting bounding boxes representing at least areas in the frames where the said at least one object has been detected.

In a step S210, VAD is performed using a Probabilistic Graphical Model, PGM, based on the said at least one object that has been detected and tracked. In other words, the PGM is fed, directly or indirectly, with the output of the MOT and the PGM uses conditional probability distributions to identify one or more anormal events. For example, the PGM is fed with the above-mentioned bounding boxes generated and/or output by the MOT for several consecutive frames and analyses characteristics of the bounding boxes to identify the said one or more abnormal events. Alternatively and/or additionally, the PGM may analyse characteristics of the respective frames in which the bounding boxes are present and/or characteristics of the object that has been detected and tracked. All of these characteristics may be represented by variables, which can be discretised or not for the sake of simplicity or accuracy, respectively. Note that the present invention is not limited to a scenario wherein the output of the MOT is sent as is to the PGM. In other words, the invention also covers scenarios wherein the output of the MOT is processed (e.g. formatted to a specific format, truncated or the like) before being input into the PGM and/or used by the PGM.

The PGM is computer-readable such that the VAD may be performed in a partial or fully automated way. For example, the PGM comprises a computer-readable Directed Acyclic Graph, DAG. The PGM may further preferably be human-readable, to improve intelligibility of the VAD processing and results.

Preferably, the PGM may model at least a spatial dimension for performing VAD within each of the said consecutive frames and a temporal dimension for performing VAD across the said consecutive frames.

Preferably, in order to efficiently model the spatial dimension of the model which is responsible of localizing anomalous events within single frames, the consecutive frames may be divided into uniform grid structures of adjacent grid cells. The cells are preferably divided into uniform grid structures of quadratic grid cells. However, other configurations are possible such as rectangular, hexagonal, polygonal or parallelogrammical adjacent grid cells may be suitable. The below description may thus be adapted to include such different cell shapes. The size of any of these cells may depend on the overall resolution of the images in the underlying dataset and may therefore vary across them.

Preferably, the method may comprise determining for each bounding box, which cells intersect with at least a part of that box, for performing VAD. Each bounding box may be considered in full or in part for determining which cells partially or fully intersect with that box.

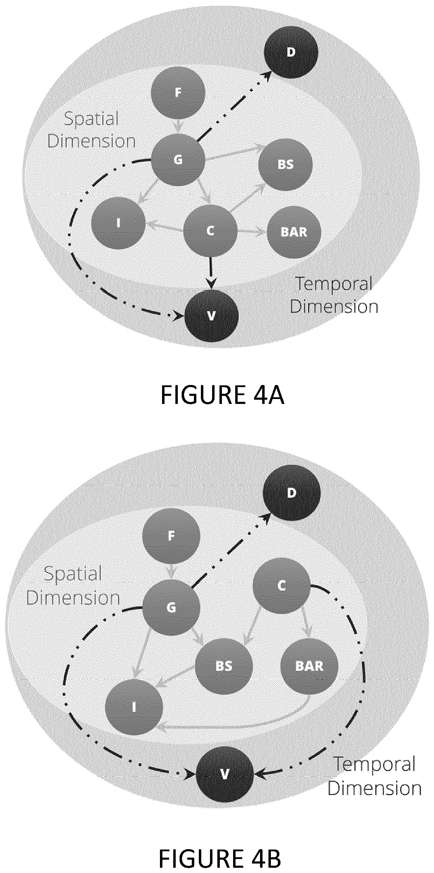

Preferably, the spatial dimension may be defined by a plurality of variables chosen amongst the group comprising: a frame identifier, a scene identifier, a grid cell identifier, an intersection area representing an area of overlap between a bounding box and at least one grid cell, an object class representing a category of the object that has been detected and tracked, a bounding box size, and a bounding aspect ratio corresponding to a bounding box width-to-heigh ratio. The scene identifier preferably replaces the frame identifier, as detailed below in connection with Figures 4A to 4D. The scene identifier advantageously allows the unification of recordings from different camera perspectives into one PGM.

Preferably, the temporal dimension may be defined by the following variables: a velocity of the object that has been detected and tracked, and a movement direction of the object that has been detected and tracked. More preferably, the velocity and/or movement direction are respectively determined based on at least one velocity and at least one movement of a bounding box across consecutive frames.

Preferably, the PGM may model relationships between the said cells and the said variables.

Preferably, the PGM comprises a Discrete Bayesian Network, DBN.

However, the PGM may alternatively comprise a Dynamic Bayesian Network. Such a Dynamic Bayesian Network will generally rely on previous frame data to perform VAD, and thus allows processing of continuous data, which has both advantages and disadvantages. For instance, a Dynamic Bayesian Network will be better at performing VAD based on historical data, but will conversely be less able than a DNB to detect anomalies in cases where a variable being monitored for VAD drops out of the field of view (video data). A DBN's training and inference process will also generally be faster, which is advantageous from a computational and security perspective. However, since a DBN relies on discretised data, there is a potential risk of missing out on details relevant for VAD, which could otherwise be considered when using a Dynamic Bayesian Network.

Preferably, the DBN may analyse dependencies between the said variables by means of conditional probability distributions. More preferably, the DBN may analyse dependencies between the said cells and the said variables by means of conditional probability distributions.

Preferably, at least some values of the said variables are determined and discretised in order to perform VAD using the PGM.

The present invention also covers a computer program which, when run on a computer, causes the computer to carry out a method according to any one of the alternatives of the present disclosure. The invention also provides a computer-readable data carrier having stored thereon the said computer program.

The present invention further covers a video processing apparatus, comprising at least one processor configured to detect and track at least one object of interest across consecutive frames of video surveillance data; perform VAD using a Probabilistic Graphical Model, PGM, based on the said at least one object that has been detected and tracked.

The video processing apparatus may take the form of the operator client (client apparatus) 120 or the analytics server 170 described above, for example. However, the present invention is not limited to these examples.

The present invention also covers a video surveillance system comprising at least one video processing apparatus as described in the present disclosure, and one or more video cameras which send their video streams to the said apparatus. Preferably, the said system comprises one or more display to display results output by the PGM.

The PGM may be as specified in any one of the alternative described in the present disclosure. For example, the PGM may model the spatial and the temporal dimensions and their corresponding variables as specified in any one of the alternative described in the present disclosure.

Preferably, the at least one processor may be further configured to generate bounding boxes representing at least areas in the frames where the said at least one object that has been detected; divide the said consecutive frames into uniform grid structures of quadratic grid cells; and determine for each bounding box, which cells intersect with at least a part of that box, for performing VAD.

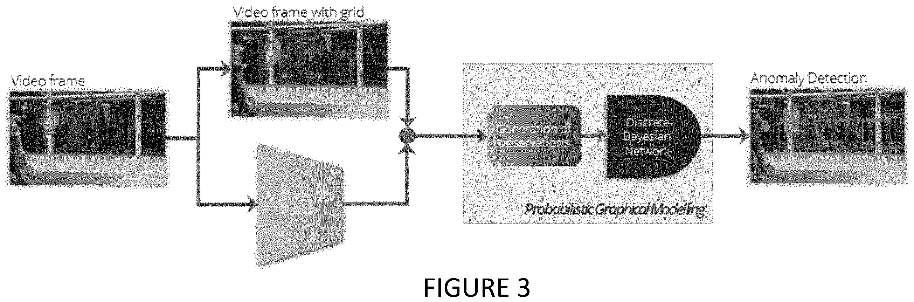

Figure 3a illustrates a pipeline for VAD according to the invention. In the present example, the pipeline comprises an off-the-shelf MOT which does not require any further modifications, in combination with a DBN which can be flexibly adapted to the use case at hand. Both components will be discussed in further details below.

Discrete Bayesian Network.

In the present example, the consecutive frames of video data are divided into uniform grid structures of quadratic grid cells. Given the fixed locations of all these cells and potentially overlapping bounding boxes of detected objects, the primary objective of the DBN is to analyse dependencies between grid cells and (dynamic) objects by means of conditional probability distributions. In the present example, this is accomplished by modelling this relationship in terms of several characteristics that can be primarily attributed to the bounding boxes.

Random Variables.

In probability theory, the domain of a given problem is described by properties of the world represented by the problem. Those properties are also known as random variables (RV) which may be modelled by either discrete or continuous values. For comprehension reasons, it is important to observe that events such as A and B in Bayes' Theorem (i.e. $P(A|B) = \frac{P(B|A) \cdot P(A)}{P(B)}$ ) are equivalent to the assignment of a particular value to a specific RV. In mathematical terms, for some set of RVs denoted by $\chi$, it can be stated that $P(A) = P(X_i = x_i)$ where variable $X_i$ takes on the value $x_i$, while $P(B) = P(X_j = x_j)$, for example.

The following illustrates an overview of an entire sample space S with all its RVs, their respective types (numerical or categorical) and value spaces (VS) which may be considered relevant to solving the task at hand. On this note, it is crucial to highlight the degree of freedom which is given throughout the underlying modelling process: it is always possible to add more RVs to the model, extend/shorten the individual VSs and/or change the structure of imposed dependencies. Accordingly, the present invention is not limited to the described S, RVs, types and VS.

Frame (F): By assigning the index of the respective frame to every observation, it is ensured that the content of individual images is well isolated across all training frames. During inference, this RV is ignored. The total number of training frames in a dataset is denoted by $F_{total}$ in the definition of the VS below. *Type:* Numerical,

VS: $\{f \in \mathbb{N}^+ | 1 \leq f \leq F_{total}\}$.

Grid Cell (GC): All grid cells have a unique identifier assigned to them which depends on the size that was chosen based on the dataset at hand. In the definition of the VS below, $G_{total}$ corresponds to the total number of cells the images are split into. *Type:* Numerical, VS: $\{g \in \mathbb{N}^+ | 1 \leq g \leq G_{total}\}$.

Intersection Area (I): Given that a bounding box of an object overlaps with a cell, the intersection area relative to the cell size is considered: If the relative intersection area is non-zero and equals to less than 0.25, the value for I is 'little'. If it is greater than or equal to 0.25, it is considered ' 1/4'. If it is greater than or equal to 0.5, it is considered ' 1/2'. If it is greater than or equal to 0.75, it is considered '3/4'. If it is equal to 1.0, it is considered 'full'. *Type:* Categorical, VS: {little, 1/4, 1/2, 3/4, full}.

Object Class (C): Indices of object categories are imposed by the dataset the object detector used in the MOT was trained on (MS-COCO - Zhian Liu, Yongwei Nie, Chengjiang Long, Qing Zhang, and Guiqing Li. A hybrid video anomaly detection framework via memory-augmented flow reconstruction and flow-guided frame prediction. In 2021 IEEE/CVF International Conference on Computer Vision (ICCV), page 13568-13577, Montreal, QC, Canada, Oct 2021. IEEE.), and equivalent to a total of 80 distinct categories: *Type:* Numerical, VS:

$\{c \in \mathbb{N}^+ | 1 \leq c \leq 80\}$.

Bounding Box Size (BS): Given a bounding box and the frame area it covers in pixels, an object's size is classified according to a scale created with respect to statistical metrics obtained through computational analysis of bounding box sizes which have been recorded of objects belonging to the same class in the training set. *Type:* Categorical, VS: {xs, s, m, l, xl}.

Bounding Aspect Ratio (BAR): The aspect ratio of a bounding box is classified based on the result of dividing bounding box width by bounding box height: If the resulting value is greater than 1, the object orientation is 'landscape', if it is less than 1, it is considered 'portrait', and 'square' otherwise. *Type:* Categorical, VS: {portrait, landscape, square}.

Object Velocity (V): An object's velocity across two consecutive frames is determined by the displacement between the two center coordinates of the corresponding bounding boxes divided by 2. This continuous velocity is then discretized according to statistical metrics obtained through computational analysis of average velocities at which individual objects belonging to the same class have been moving throughout the training set. *Type:* Categorical, VS: {idle, slow, normal, fast, very fast, super fast, flash} .

Movement Direction (D): The direction in which an object is moving is classified according to the angle of its displacement such that it can be seen as the hypotenuse in a right-angled triangle, and therefore computed by means of the arcus tangent function. Approximations are used for cases in which the arctangent is undefined, i.e., at $\pm 90°$: *Type:* Categorical, VS: {N, NE, E, SE, S, SW, W, NW}.

Graphical Representation.

One example set of direct interactions between RVs resulting in a Directed Acyclic Graph (DAG) is shown in Figure 4A. A root node is represented by the frame variable F as it defines the global space in which all objects and their activities are contained, including the grid cells. It only has one child node corresponding to the static grid cells G. From this node G three directed edges are leading to classes C, intersections I and bounding box sizes BS. The latter connection is required in order to highlight that object sizes are not only dependent on the object's class, but also at the location within the frame in which the object appears. This is assumed to be of particular benefit in datasets which depict very deep scenes in which objects located in the far back will naturally appear smaller compared to as if they were placed closer to the camera. Since an intersection I is dependent on both, a grid cell and the class of the affected object, another edge points from the class node C to the intersection node I. Last but not least when looking at those nodes which target spatial/appearance-based anomalies, all object bounding box sizes BS and aspect ratios BAR are conditioned on the class C the corresponding object belongs to. On the temporal axis of the model, the direction D in which an object is moving is conditioned on the affected cells G, whilst the velocity of that movement V is dependent on both, the class C the object belongs to and the grid cells G in which the object appears. The latter edge has been modelled based on highly akin reasoning as the one leading from G to BS.

Another example network structure which will be analysed in the present disclosure to address the challenge of significantly varying camera perspectives across different datasets is presented in Figure 4B. The motivation for defining this new set of probabilistic interactions between RVs is based on a slight change in perspective caused by conditioning the intersection area I of an object and a grid cell G on the actual size of its bounding box BS, the box aspect ratio BAR, and the affected cell. This forces the class node C to be left without parent while keeping both, BAR and BS, as child nodes. Temporal nodes, i.e., box velocity V and direction of movement D, remain with the same connections as in Figure 4A. This particular constellation of nodes and edges may be beneficial for those datasets in which variations of class-wise box sizes are limited across the scene due to a more surveillance-specific perspective of the camera (top-down).

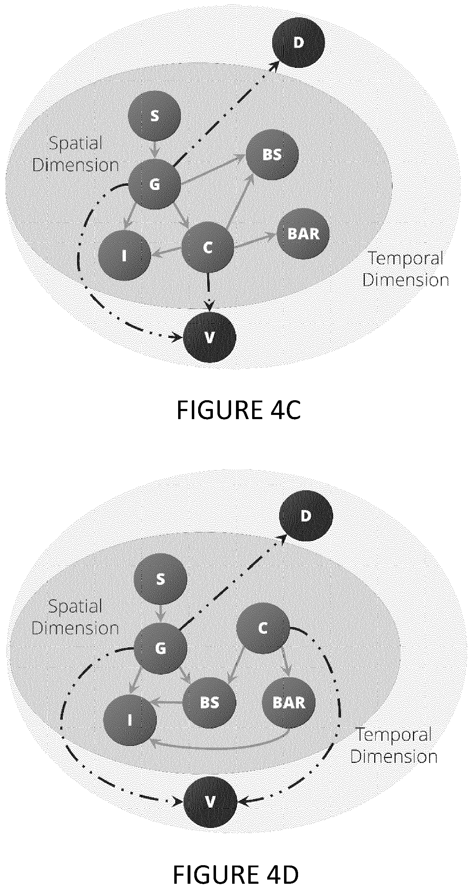

Still another example network structure is presented in Figure 4C. Figure 4C differs from Figure 4A in that the root node corresponds to a Scene variable (S). The Scene (S) variable represents a unique identifier (i.e. scene identifier) for each of distinct scenes contained in a multi-scene dataset. However, if the dataset comprises a single scene, a constant is assigned to this variable.

*Type:* Numerical, VS: $\{s \in \mathbb{N}^+ | 1 \leq s \leq S_{\text{total}}\}$, wherein $S_{\text{total}}$ is the total number of scenes. Such a node allows to compare between different scene perspectives, for instance, by treating some datasets as multiple single-scene problems to be solved. In other words, the network may be construed such as to start the VAD process depending on a video camera's perspective, i.e. field of view. That is, the network will output a different result depending on the field of view being considered. This means that the same network may advantageously be used for different video cameras' perspectives. Accordingly, it becomes possible to consider a depth or understanding of a scene to assess certain variables, such as a person's velocity. More generally speaking, this provides an adaptive granularity of VAD.

Still another example network structure is presented in Figure 4D. Figure 4D differs from Figure 4B in that the root node corresponds to the above-mentioned Scene variable (S). Reference is made to the above description of Figure 4B and the Scene variable (S).

Parameter estimation.

The term "learning" in the context of PGMs describes the process of deriving the most optimal set of probability estimates for all possible events which are conditioned on certain prior observations. In other words, once the graphical representation of the problem distribution has been set, the goal of parameter learning is to provide the means to perform probabilistic reasoning about the stochastic values of one or even multiple RVs. This can be achieved by constructing an approximation of the so-called joint probability distribution which is valid for the given space of possible values of the RVs.

Popular optimization algorithms for conducting parameter learning comprise three estimators: Maximum Likelihood Estimator (MLE), Bayesian Estimator and the Expectation-Maximization (EM) algorithm. While EM is primarily used in cases in which data is incomplete, the Bayesian approach is of advantage when only a limited number of observations is available. In such a situation it can be crucial to counter-act potential biases resulting from limited data by introducing prior knowledge about the problem. In the present example, such prior knowledge is unavailable since it is unknown which objects are appearing in the scene at any location. Additionally, given the large number of generated observations at hand, the MLE was consequently chosen for fitting the classifier to the training data. Briefly, the aim of Maximum Likelihood estimation is to maximize the likelihood function describing our probabilistic model (see Bayes' Theorem). Since this model is parametrized by a parameter vector θ containing the set of parameters of all RVs, the likelihood function is equivalent to a mean of measuring how the obtained probabilities change with respect to different values of θ. In other words, the likelihood function estimates the probability, also called density, assigned to the training data by the model given a particular choice of parameters.

Inference.

During inference in Probabilistic Graphical modelling it is possible to query the generated joint probability distribution in order to obtain the posterior probabilities for events which occurred under the presence of other certain prior observations, also known as evidence. In short, this means solving Bayes' Theorem. Inference in DBNs may be conducted in two ways: by Variable Elimination or Belief Propagation. In this scenario, the former was chosen to conduct the detection of anomalous objects in a frame. To perform anomaly detection, an anomaly score is extracted from the DBN model for all objects which were detected in the test set. Given that the class of the object is known upfront, all remaining evidence is gathered and supplied to the query which retrieves the Conditional Probability Table (CPT) for all classes at a certain grid cell. In mathematical terms, this results in the computation of $P(C|G, I, BS, BAR, V, D)$. By looking the detected class up in this CPT, the probability score is then extracted at every cell covered by at least one part of the object's bounding box area, and averaged. If a detected class does not exist in the CPT, a score of 0.0 is assigned in the present example.

Experiments

Datasets.

Experiments have been conducted on the three most popular and publicly available VAD datasets: CUHK Avenue, ShanghaiTech and StreetScene. While CUHK Avenue and StreetScene contain pure single-scene camera recordings only, ShanghaiTech can be seen as a multiscene VAD dataset. Hence, when it comes to this particular dataset, experiments are split into sub-problems each of which is targeting one particular scene only resulting in a total of 10 independent experiments run on ShanghaiTech. Due to significant camera movement, which is present in scenes 01 and 04, these two scenarios were excluded from the training and test runs. The overall performance of the proposed method is later evaluated in a similar fashion to the one applied to all test videos in StreetScene and CUHK Avenue.

Training.

The term "training", effectively speaking, refers to the estimation of the joint probability distribution spanned by sample space S which was described above. The data which is used for this purpose is fully discrete and can therefore be represented in a tabular form through a set of distinct observations.

Generation of observations.

Following the design of the network structures presented in Figure 4A and 4B, a single observation comprises a fixed set of features equivalent to the RVs of the sample space S. For some grid cell intersecting with some bounding boxes present in the current frame, one such observation is being created and added to a tabular dataset. As it has been already mentioned, two distinct scenarios are distinguished when intersections between grid cells and bounding boxes are considered: Either the entire area of a bounding box is taken into account such that all intersections of an object with the overlapping grid cells result in single observations each, or solely the bottom part of a bounding box is processed which effectively affects only a subset of cells in a particular row of the uniform grid structure. This distinction is a crucial part of the overall ablation study that has been conducted concerning the anomaly detection performance of the Discrete Bayesian Network at hand and will be addressed when discussing the results of the proposed method. In either of these two scenarios, such an observation generation procedure implies that those particular cells which have not been intersecting with any part of any bounding box throughout the entire training set of video frames, will not be part of the tabular training data.

This leaves the overall number of observations to be strictly dependent on the granularity of grid structure, the number of object occurring across the training set of video frames and their respective sizes.

Technical details.

The present examples are based on Python 3, PyTorch v1.11.0 and pgmpy, an opensource Python implementation of Probabilistic Graphical Models, Bayesian Networks in particular. To pre-process all training and test frames prior to the observation generation step, one of the demo scripts published by the authors of BoT-SORT, Aharon et al., is used. In this script YOLOv7 was the chosen object detector, pretrained on the MS-COCO dataset (Tsung-Yi Lin, Michael Maire, Serge Belongie, James Hays, Pietro Perona, Deva Ramanan, Piotr Dollar, and C. Lawrence Zitnick. Microsoft coco: Common objects in context. In David Fleet, Tomas Pajdla, Bernt Schiele, and Tinne Tuytelaars, editors, Computer Vision - ECCV 2014, Lecture Notes in Computer Science, page 740-755, Cham, 2014. Springer International Publishing.), including an object re-identification module that was trained on the Multiple Object Tracking 17 (MOT17) dataset (Anton Milan, Laura Leal-Taixe, Ian Reid, Stefan Roth, and Konrad Schindler. Mot16: A benchmark for multi-object tracking. (arXiv:1603.00831), May 2016. arXiv:1603.00831 [cs].). The underlying hardware is composed of an NVIDIA™ GPU, model GeForce RTX™ 3080 Ti, with 12GB of memory, running CUDA™ 11.3.

Evaluation

Metrics.

Such as the majority of research which has been published in the domain of VAD to date, the performance of the VAD pipeline shown in Figure 3 is evaluated by means of the following set of evaluation metrics: Frame-level Area Under the Receiving Operator Curve (AUROC) on micro- and macrolevel, and Region-Based Detection Criterion (RBDC) and Track-Based Detection Criterion (TBDC) on macro-level only. Evaluations on macro-level take all test videos concatenated to a single recording into consideration, while those on macro-level report the results obtained through the weighted average after considering each test video individually.

Ground Truth annotations.

With the introduction of the two new metrics, RBDC and TBDC, Ramachandra and Jones (Bharathkumar Ramachandra and Michael J. Jones. Streetscene: A new dataset and evaluation protocol for video anomaly detection. In 2020 IEEE Winter Conference on Applications of Computer Vision (WACV), page 2558-2567, Snowmass Village, CO, USA, Mar 2020. IEEE.) have also released a set of new Ground Truth (GT) annotations for the CUHK Avenue dataset. A closer look at this new set of GT annotations in comparison with the contribution made by Lu et al. (Cewu Lu, Jianping Shi, and Jiaya Jia. Abnormal event detection at 150 fps in matlab. In 2013 IEEE International Conference on Computer Vision, page 2720-2727, Sydney, Australia, Dec 2013. IEEE.) reveals significant discrepancies between the two, however, which often remains unaddressed in the evaluation sections of other publications. Since, per definition, anything deviating from the training data distribution should be considered an outlier, i.e., anomalous, the present work is going to be fully evaluated on the GT annotations provided by Ramachandra and Jones. This includes global frame-level information and local bounding box annotations, and makes us ignore any GT information provided by Lu et al. Results reported on StreetScene are not affected by the phenomenon described above, while for ShanghaiTech, GT bounding box annotations provided by Georgescu et al. presented alongside their work are used (Mariana Iuliana Georgescu, Radu Ionescu, Fahad Shahbaz Khan, Marius Popescu, and Mubarak Shah. A background-agnostic framework with adversarial training for abnormal event detection in video. IEEE Transactions on Pattern Analysis and Machine Intelligence, pages 1-1, 2021). As already mentioned above, however, when it comes to ShanghaiTech, two out of the available 12 scenes had to be excluded from the experiments.

Results.

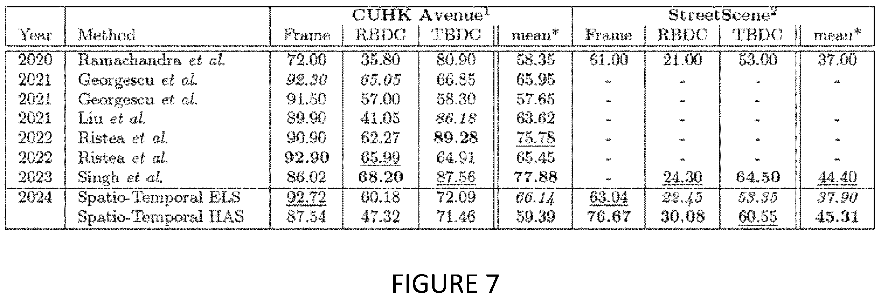

For the datasets CUHK Avenue and ShanghaiTech, latest state-of-the-art results reported by other publications are provided. Since they do not exist for StreetScene, only the results reported by Ramachandra and Jones are reported. All the quantitative results can be found in the table shown in Figure 7 described below.

CUHK Avenue.

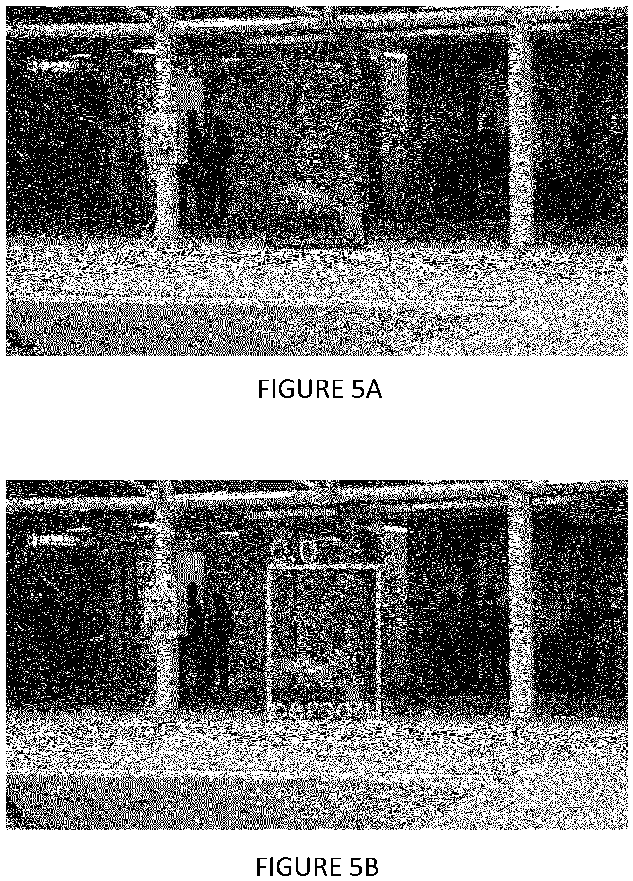

Figures 5A and 5B show the effect achieved by only considering the intersections of cells with the bottom border of a bounding box, in contrast to recording all cells which are partially or fully covered by the object. This effect becomes very significant when very deep scenes are depicted by a dataset, such as CUHK Avenue, in which due to the imposed perspective significant occlusions between objects can result in excessive noise. Figure 5A shows the result of training the PGM based on all cells which are affected by an object's bounding box. This particular example of the model is not capable of detecting a human which is moving at an anomalous speed across the scene. Figure 5B on the other hand, stresses out how the noise in the training data is reduced when the processed samples are reduced to merely include cells intersecting with the bottom border of an object's bounding box only. The scores achieved for Figure 5A (whole box approach) are as follows: Frame-level AUROC: 55, 54, RBDC: 28, 12, TBDC: 44, 15; and for Figure 5B (bottom border approach) are as follows: Frame-level AUROC: 74, 00, RBDC: 60, 63, TBDC: 98, 59. Reported results are based on test video #03 of CUHK Avenue. Ground Truth annotations are drawn in red, and detections in green (0 = anomalous, 1 = normal).

ShanghaiTech.

The considerably low performance reached by our models on ShanghaiTech can be explained by the significant variety of scene perspectives which is contained in this dataset. Based on an observation which will be described further below when discussing the results obtained on StreetScene, it is very likely that using a single DBN with a specific dependency structure will not be capable of effectively addressing recordings from all camera perspectives. ShanghaiTech remains a multiscene anomaly detection dataset, and therefore merging the best results obtained with different network structures would be the most appropriate approach for this particular dataset.

StreetScene.

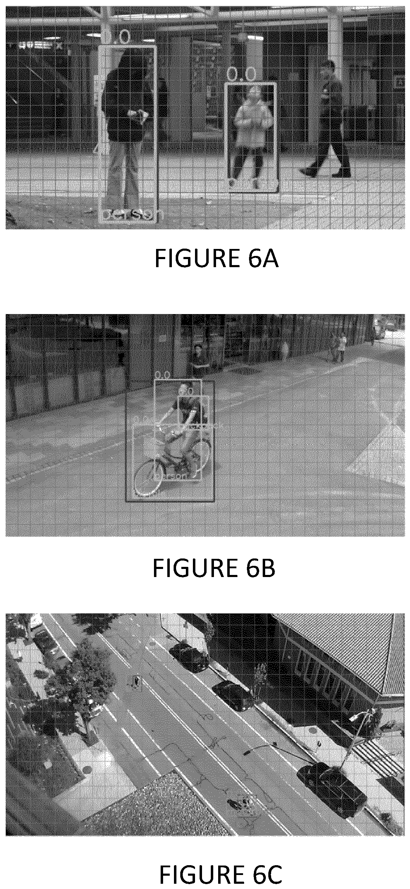

Based on the conducted experiments comparing the two network structures shown in Figure 4A and 4B it became clear that the second version (Figure 4B) turned out to be more suitable for the use-case presented by StreetScene. Conditioning the intersection of a bounding box with the affected grid cells on the grid cell and the box size, instead of the object class, dropping the dependency between grid cell and object class completely, yielded better results than the first version of the network (Figure 4A). One possible explanation for this observation can be the found in the difference of recording perspectives when compared against CUHK Avenue on which a significant performance drop was experienced when combined with the second network version (Figure 4B). While CUHK Avenue was recorded from a rather low point of view resulting in a significant scene depth, StreetScene represents a typical video surveillance set-up in which a camera is positioned high up offering a top-down perspective on the scene. This implies that the scene depth is comparably smaller than the one in CUHK Avenue, consequently leading to less variations in bounding box sizes of objects across the frame. All in all, it can be observed throughout all experiments that finer grid cell sizes lead to higher detection accuracies of anomalies. Qualitative results for all datasets are further shown in Figures 6A, 6B, 6C.

Figure 6A shows the results for CUHK Avenue - Test video #08, Figure 6B shows the results for ShanghaiTech - Test video #02 and Figure 6C shows the results for StreetScene - Test video #16. Ground Truth annotations are drawn in red, and detections in green (0 = anomalous, 1 = normal).

Figure 7 shows quantitative Results: Frame-level AUC scores for CUHK Avenue and StreetScene, including the RBDC, TBDC and the *mean value of the two latter. Our spatio-temporal Eye Level Shot (ELS) and spatio-temporal High Angle Shot (HAS) models are equivalent to Figures 4C and 4D, respectively. Bold, underlined, and italicised percentages respectively indicate highest, second-highest and third-highest results per metric. ([1]cell size = 20, or [2]40 for our method). Ramachandra and Jones refers to Bharathkumar Ramachandra and Michael J. Jones. Street scene: A new dataset and evaluation protocol for video anomaly detection. In 2020 IEEE Winter Conference on Applications of Computer Vision (WACV), page 2558-2567, Snowmass Village, CO, USA, Mar 2020. IEEE.; Georgescu et al. (first line) refers to Mariana Iuliana Georgescu, Radu Ionescu, Fahad Shahbaz Khan, Marius Popescu, and Mubarak Shah. A background-agnostic framework with adversarial training for abnormal event detection in video. IEEE Transactions on Pattern Analysis and Machine Intelligence, pages 1-1, 2021.; Georgescu et al. (second line) refers to Mariana-Iuliana Georgescu, Antonio Barbalau, Radu Tudor Ionescu, Fahad Shahbaz Khan, Marius Popescu, and Mubarak Shah. Anomaly detection in video via self-supervised and multi-task learning. In 2021 IEEE/CVF Conference on Computer Vision and Pattern Recognition (CVPR), page 12737-12747, Nashville, TN, USA, Jun 2021. IEEE.; Liu et al. refers to Zhian Liu, Yongwei Nie, Chengjiang Long, Qing Zhang, and Guiqing Li. A hybrid video anomaly detection framework via memory-augmented flow reconstruction and flow-guided frame prediction. In 2021 IEEE/CVF International Conference on Computer Vision (ICCV), page 13568-13577, Montreal, QC, Canada, Oct 2021. IEEE.; Ristea et al. (first line) refers to Nicolae-Catalin Ristea, Neelu Madan, Radu Tudor Ionescu, Kamal Nasrollahi, Fahad Shahbaz Khan, Thomas B. Moeslund, and Mubarak Shah. Self-supervised predictive convolutional attentive block for anomaly detection. page 13576-13586, 2022., in combination with the work from Liu et al. mentioned above; Ristea et al. (second line) refers to the work from Ristea et al. mentioned above (Self-supervised predictive convolutional attentive block for anomaly detection), in combination with the work from Georgescu et al. (first line) mentioned above. Finally Singh et al. refers to Ashish Singh, Michael J Jones, and Erik G Learned-Miller. Eval: Explainable video anomaly localization. pages 18717-18726, June 2023. Ashish Singh, Michael J Jones, and Erik G Learned-Miller. Eval: Explainable video anomaly localization. pages 18717-18726, June 2023.

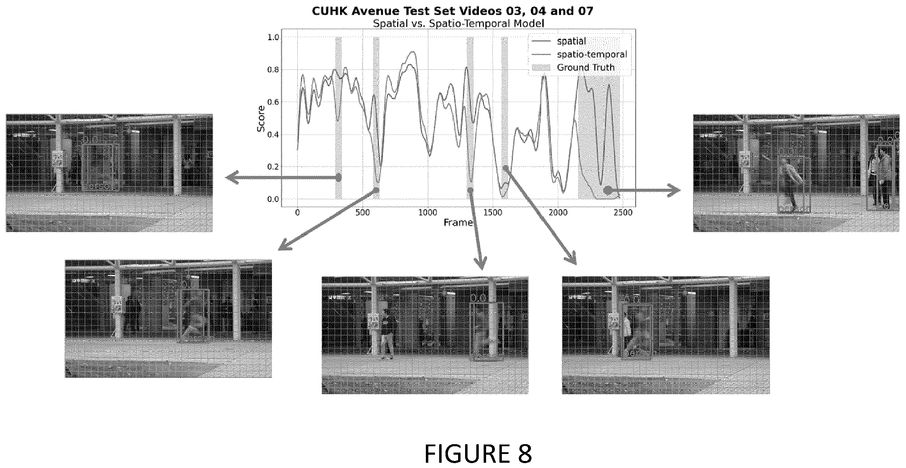

Figure 8 illustrates the transition from a spatial ELS (not shown but corresponding to Figure 4C without the temporal dimension) to the spatiotemporal ELS shown in Figure 4C. More precisely, Figure 8 contrasts a spatial and a spatiotemporal ELS model (Figure 4C) based on three concatenated CUHK Avenue test videos, containing only temporal anomalies (a man running, a child jumping) in terms of the obtained frame-level AUC scores. The detections presented in all five screenshots are output by the spatio-temporal model version. We choose test videos #03, 04 and 07 of CUHK Avenue for this demonstration purpose because of the little background noise and the clearly visible temporal anomalies they contain. The enhanced capability of detecting temporal anomalies with our spatio-temporal ELS is indicated here by the clear drop in frame-level AUC in areas with a highlighted background, i.e., anomalous frames.

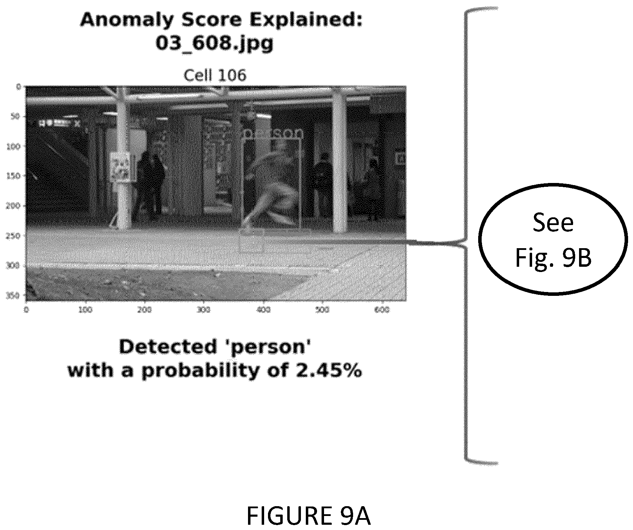

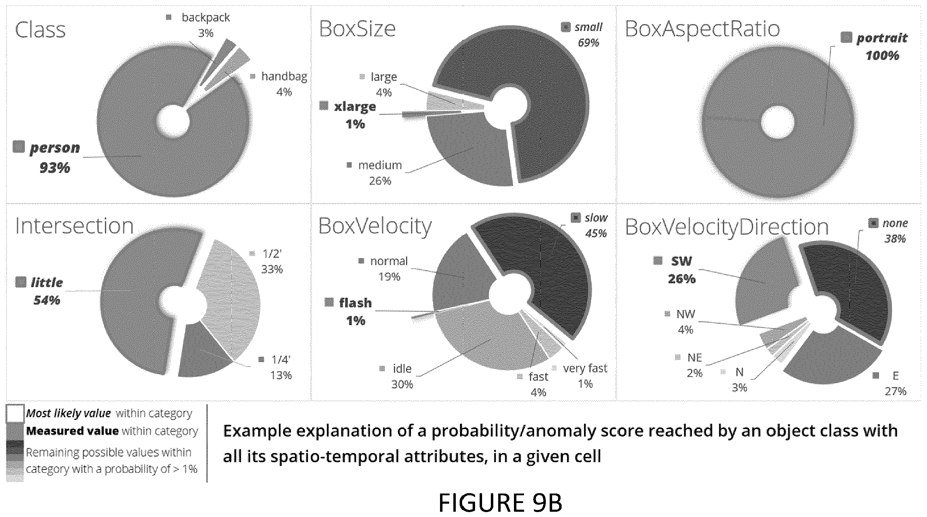

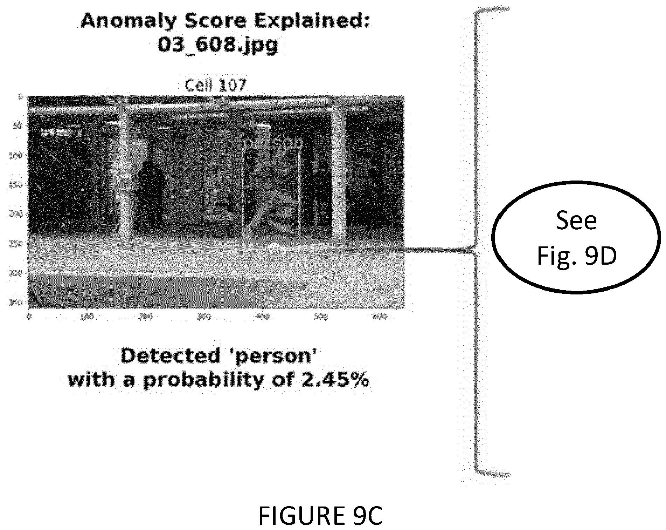

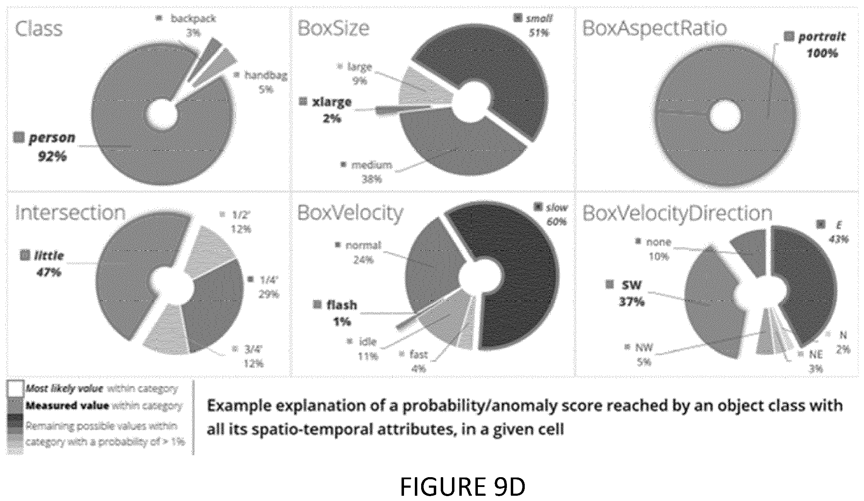

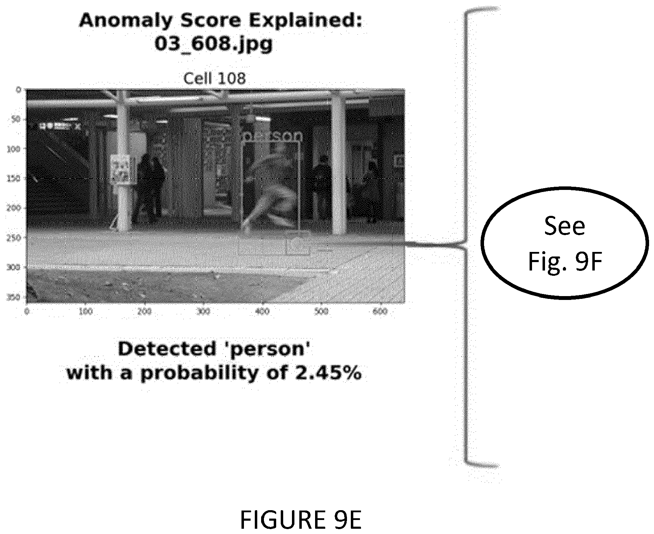

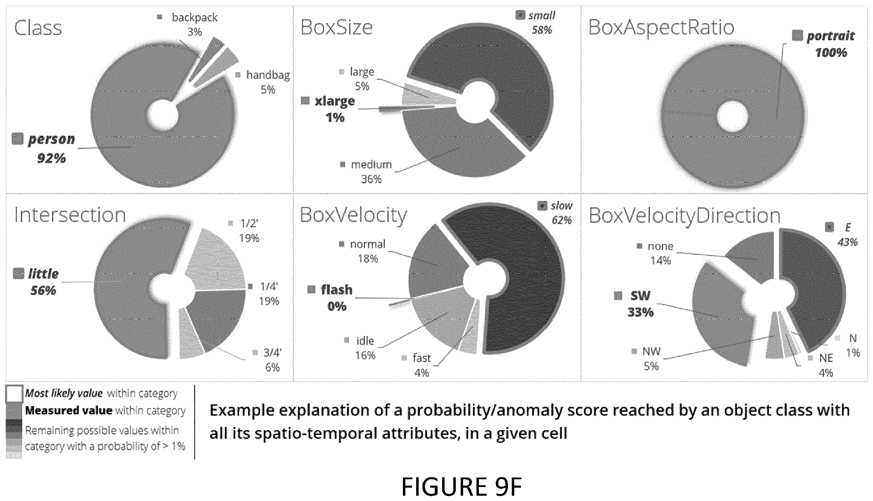

Figure 9A is an example of a VMS view of a detected anomaly and Figure 9B shows how the detection results may be presented to a user of the VMS. Given an object of very low probability, i.e., an anomaly, observed in some cell during test time, we aim at finding an answer to the question concerning the reason for this object being so improbable/anomalous within the context of the visual attributes modelled. Hence, in Figures 9A/9B, we also present an example visualization of an anomaly taken from the third test video of CUHK Avenue. Based on the breakdown of individual probability distributions of all visual attributes defined above, it can be deduced from these charts that apart from the velocity direction ("SW"), it is primarily the size ("xlarge") and velocity ("flash") of the given bounding box itself which are contributing most to the object's low probability. The reason for this is that first, the measured values within those two categories do not correspond to the most likely ones, i.e., the ones occupying the largest fraction of the respective chart, and that second, they in fact represent the least likely values among all others that were encountered during training. Every chart was generated based on the output of a query retrieving a CPT with all values that were observed during training for all RVs, respectively. The query is supplied with cell index and all remaining bounding box attributes except for the one under investigation as hard evidence. Similar visualizations for the remaining two cells with which the bounding box overlaps are given in Figures 9C and 9D (middle cell), and Figures 9E and 9F (right cell) for completeness. Accordingly, a user of the VMS may be presented with detection values for the visual attributes modelled, that is, values for the tracked variables, allowing them to understand the output of the network model.

It will be appreciated that the video frames used for performing VAD according to the invention may be obtained from a training dataset, from video surveillance cameras and/or video recording servers. Object Class (C)

In other words, the present invention applies to training and/or real-world situations.

Advantageously, the present invention (method, computer program and video processing apparatus) may advantageously use parallel processing (parallel computing) to perform VAD. That is, respective groups of consecutive frames may be processed by respective processing units (such as different GPUs, CPUs and/or different cores of these units). Additionally and/or alternatively, different objects may be detected and tracked using respective units. Accordingly, significant speed up may be achieved by means of appropriate parallelization mechanisms.

While the present invention has been described with reference to embodiments, it is to be understood that the invention is not limited to the disclosed embodiments. The present invention can be implemented in various forms without departing from the principal features of the present invention as defined by the claims.

**Claims**

1. A computer implemented method of Video Anomaly Detection, VAD, the method comprising:

    detecting and tracking at least one object of interest across consecutive frames of video surveillance data;
    performing VAD using a Probabilistic Graphical Model, PGM, based on the said at least one object that has been detected and tracked.

2. The method according to claim 1, wherein the PGM comprises a Discrete Bayesian Network, DBN.

3. The method according to claim 1 or 2, wherein the PGM comprises a computer-readable Directed Acyclic Graph, DAG.

4. The method according to any one of the preceding claims, wherein the PGM models at least a spatial dimension for performing VAD within each of the said consecutive frames and a temporal dimension for performing VAD across the said consecutive frames.

5. The method according to any one of the preceding claims, the method further comprising:

generating bounding boxes representing at least areas in the frames where the said at least one object has been detected.

6. The method according to claim 5 in combination with claim 4, wherein each of the spatial and temporal dimensions is defined by a plurality of variables related to characteristics of the bounding boxes, characteristics of the respective frames in which these boxes are and/or characteristics of the object that has been detected and tracked.

7. The method according to claim 5 or 6, the method further comprising:

    dividing the said consecutive frames into uniform grid structures of adjacent grid cells, and determining for each bounding box, which cells intersect with at least a part of that box, for performing VAD.

8. The method according to claim 6 or 7, wherein the spatial dimension is defined by a plurality of variables chosen amongst the group comprising: a frame identifier, a scene identifier, a grid cell identifier, an intersection area representing an area of overlap between a bounding box and at least one grid cell, an object class representing a category of the object that has been detected and tracked, a bounding box size, and a bounding aspect ratio corresponding to a bounding box width-to-heigh ratio.

9. The method according to any one of claims 6 to 8, wherein the temporal dimension is defined by the following variables: a velocity of the object that has been detected and tracked, and a movement direction of the object that has been detected and tracked.

10. The method according to any one of claims 6 to 9, wherein at least some values of the said variables are determined and discretised in order to perform VAD using the PGM.

11. The method according to any one of claims 7 to 10, in combination with claim 6, the method further comprising:
for at least one cell which intersects with a bounding box, displaying values of the variables in the said plurality of variables for that cell.

12. The method according to any one of the preceding claims, comprising using parallel processing to perform VAD.

13. A computer program which, when run on a computer, causes the computer to carry out the method according to any one of the preceding claims.

**14.** A video processing apparatus, comprising at least one processor configured to:

> detect and track at least one object of interest across consecutive frames of video surveillance data;
> perform VAD using a Probabilistic Graphical Model, PGM, based on the said at least one object that has been detected and tracked.

**15.** The apparatus according to claim 14, wherein the PGM comprises a Discrete Bayesian Network, DBN, and wherein the PGM models at least a spatial dimension for performing VAD within each of the said consecutive frames and a temporal dimension for performing VAD across the said consecutive frames.

FIGURE 1

S200

Detecting and tracking at least one object of interest across consecutive frames of video surveillance data

S210

Performing Video Anomaly Detection, VAD, using a Probabilistic Graphical Model, PGM, based on the said at least one object that has been detected and tracked

FIGURE 2

Video frame

Video frame with grid

Multi-Object Tracker

Generation of observations

Discrete Bayesian Network

*Probabilistic Graphical Modelling*

Anomaly Detection

FIGURE 3

FIGURE 4A

FIGURE 4B

FIGURE 4C

FIGURE 4D

FIGURE 5A

FIGURE 5B

FIGURE 6A

FIGURE 6B

FIGURE 6C

| Year | Method | CUHK Avenue[1] | | | | StreetScene[2] | | | |
|---|---|---|---|---|---|---|---|---|---|
| | | Frame | RBDC | TBDC | mean* | Frame | RBDC | TBDC | mean* |
| 2020 | Ramachandra *et al.* | 72.00 | 35.80 | 80.90 | 58.35 | 61.00 | 21.00 | 53.00 | 37.00 |
| 2021 | Georgescu *et al.* | *92.30* | *65.05* | 66.85 | 65.95 | - | - | - | - |
| 2021 | Georgescu *et al.* | 91.50 | 57.00 | 58.30 | 57.65 | - | - | - | - |
| 2021 | Liu *et al.* | 89.90 | 41.05 | *86.18* | 63.62 | - | - | - | - |
| 2022 | Ristea *et al.* | 90.90 | 62.27 | **89.28** | 75.78 | - | - | - | - |
| 2022 | Ristea *et al.* | **92.90** | 65.99 | 64.91 | 65.45 | - | - | - | - |
| 2023 | Singh *et al.* | 86.02 | **68.20** | 87.56 | **77.88** | - | 24.30 | 64.50 | 44.40 |
| 2024 | Spatio-Temporal ELS | 92.72 | 60.18 | 72.09 | *66.14* | 63.04 | *22.45* | *53.35* | *37.90* |
| | Spatio-Temporal HAS | 87.54 | 47.32 | 71.46 | 59.39 | **76.67** | **30.08** | 60.55 | **45.31** |

FIGURE 7

FIGURE 8

FIGURE 9A

Example explanation of a probability/anomaly score reached by an object class with all its spatio-temporal attributes, in a given cell

FIGURE 9B

**Anomaly Score Explained:
03_608.jpg**

Cell 107

**Detected 'person'
with a probability of 2.45%**

See
Fig. 9D

FIGURE 9C

Example explanation of a probability/anomaly score reached by an object class with all its spatio-temporal attributes, in a given cell

FIGURE 9D

**Anomaly Score Explained:
03_608.jpg**

Cell 108

**Detected 'person'
with a probability of 2.45%**

See
Fig. 9F

FIGURE 9E

Class
- backpack 3%
- handbag 5%
- **person 92%**

BoxSize
- **small 58%**
- large 5%
- **xlarge 1%**
- medium 36%

BoxAspectRatio
- **portrait 100%**

Intersection
- 1/2' 19%
- **little 56%**
- 1/4' 19%
- 3/4' 6%

BoxVelocity
- **slow 62%**
- normal 18%
- **flash 0%**
- idle 16%
- fast 4%

BoxVelocityDirection
- E 43%
- none 14%
- **SW 33%**
- NW 5%
- N 1%
- NE 4%

*Most likely value* within category
**Measured value** within category
Remaining possible values within category with a probability of > 1%

Example explanation of a probability/anomaly score reached by an object class with all its spatio-temporal attributes, in a given cell

FIGURE 9F

Europäisches
Patentamt
European
Patent Office
Office européen
des brevets

# EUROPEAN SEARCH REPORT

Application Number

EP 24 15 7687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GONZALES CHRISTOPHE ET AL: "Video Event Detection Based Non-stationary Bayesian Networks", 21 October 2016 (2016-10-21), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 419 - 430, XP047360155, ISBN: 978-3-540-74549-5 [retrieved on 2016-10-21] * sections 1-4; page 419 - page 428; figures 1-4 * ----- | 1-15 | INV. G06V10/84 G06V20/52 |
| X | LOY C C ET AL: "Detecting and discriminating behavioural anomalies", PATTERN RECOGNITION, ELSEVIER, GB, vol. 44, no. 1, 1 January 2011 (2011-01-01), pages 117-132, XP027272749, ISSN: 0031-3203 [retrieved on 2010-07-23] * sections 1-5; page 117 - page 125 * ----- | 1-15 | |

-/--

TECHNICAL FIELDS
SEARCHED      (IPC)

G06V

The present search report has been drawn up for all claims

| Place of search | Date of completion of the search | Examiner |
|---|---|---|
| The Hague | 23 July 2024 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches Patentamt
European Patent Office
Office européen des brevets

Application Number

EP 24 15 7687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNEJO IMRAN N.: "Using dynamic Bayesian network for scene modeling and anomaly detection", SIGNAL, IMAGE AND VIDEO PROCESSING, [Online] vol. 4, no. 1, 8 January 2009 (2009-01-08) , pages 1-10, XP093136981, London ISSN: 1863-1703, DOI: 10.1007/s11760-008-0099-7 Retrieved from the Internet: URL:http://link.springer.com/article/10.1007/s11760-008-0099-7/fulltext.html> * sections 1-4; page 1 - page 9 * | 1-15 | |
| X | US 2008/031491 A1 (MA YUNQIAN [US] ET AL) 7 February 2008 (2008-02-07) * paragraph [0015] - paragraph [0029]; figures 1-3 * | 1-15 | |
| X | JP 2019 194758 A (CANON KK) 7 November 2019 (2019-11-07) * figures 2,7,9,14-19 * * paragraph [0014] - paragraph [0016] * * paragraph [0027] - paragraph [0028] * * paragraph [0032] - paragraph [0035] * * paragraph [0057] - paragraph [0091] * | 1-15 | TECHNICAL FIELDS SEARCHED (IPC) |

-/--

The present search report has been drawn up for all claims

| Place of search | Date of completion of the search | Examiner |
|---|---|---|
| The Hague | 23 July 2024 | Chehade, Thomas |

EPO FORM 1503 03.82 (P04C01)

Europäisches
Patentamt

European
Patent Office

Office européen
des brevets

# EUROPEAN SEARCH REPORT

**Application Number**

EP 24 15 7687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASSAN MAHMUDUL ET AL: "Labeling abnormalities in video based complex Human-Object Interactions by robust affordance modelling", INTERNATIONAL CONFERENCE ON COMPUTER VISION AND IMAGE ANALYSIS APPLICATIONS, IEEE, 18 January 2015 (2015-01-18), pages 1-8, XP032827428, DOI: 10.1109/ICCVIA.2015.7351886 ISBN: 978-1-4799-7185-5 [retrieved on 2015-12-09] * the whole document * | 1-15 | |

-----

|  |  |  | **TECHNICAL FIELDS SEARCHED (IPC)** |
|---|---|---|---|

The present search report has been drawn up for all claims

| Place of search | Date of completion of the search | Examiner |
|---|---|---|
| The Hague | 23 July 2024 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 7687

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2024

| Patent document cited in search report | Publication date | Patent family member(s) | Publication date |
|---|---|---|---|
| US 2008031491 A1 | 07-02-2008 | NONE | |
| JP 2019194758 A | 07-11-2019 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NIR AHARON ; ROY ORFAIG ; BEN-ZION BO-BROVSKY.** Botsort: Robust associations multi-pedestrian tracking. *arXiv preprint arXiv:2206.14651,* 2022
- A hybrid video anomaly detection framework via memory-augmented flow reconstruction and flow-guided frame prediction. **MS-COCO - ZHIAN LIU ; YONGWEI NIE ; CHENGJIANG LONG ; QING ZHANG ; GUIQING LI.** IEEE/CVF International Conference on Computer Vision (ICCV). IEEE, October 2021, 13568-13577
- Microsoft coco: Common objects in context. **TSUNG-YI LIN ; MICHAEL MAIRE ; SERGE BELONGIE ; JAMES HAYS ; PIETRO PERONA ; DEVA RAMANAN ; PIOTR DOLLAR ; C. LAW-RENCE ZITNICK.** Computer Vision - ECCV 2014, Lecture Notes in Computer Science. Springer International Publishing, 2014, 740-755
- **ANTON MILAN ; LAURA LEAL-TAIXE ; IAN REID ; STEFAN ROTH ; KONRAD SCHINDLER.** Mot16: A benchmark for multi-object tracking. *arXiv:1603.00831,* May 2016
- Streetscene: A new dataset and evaluation protocol for video anomaly detection. **BHARATHKUMAR RAMACHANDRA ; MICHAEL J. JONES.** 2020 IEEE Winter Conference on Applications of Computer Vision (WACV). IEEE, March 2020, 2558-2567
- Abnormal event detection at 150 fps in matlab. **CEWU LU ; JIANPING SHI ; JIAYA JIA.** 2013 IEEE International Conference on Computer Vision. IEEE, December 2013, 2720-2727
- **MARIANA IULIANA GEORGESCU ; RADU IONESCU ; FAHAD SHAHBAZ KHAN ; MARIUS POPESCU ; MUBARAK SHAH.** A background-agnostic framework with adversarial training for abnormal event detection in video. *IEEE Transactions on Pattern Analysis and Machine Intelligence,* 2021, 1-1
- Street scene: A new dataset and evaluation protocol for video anomaly detection. **BHARATHKUMAR RAMACHANDRA ; MICHAEL J. JONES.** 2020 IEEE Winter Conference on Applications of Computer Vision (WACV). IEEE, March 2020, 2558-2567
- **MARIANA IULIANA GEORGESCU ; RADU IONESCU ; FAHAD SHAHBAZ KHAN ; MARIUS POPESCU ; MUBARAK SHAH.** A background-agnostic framework with adversarial training for abnormal event detection in video. *IEEE Transactions on Pattern Analysis and Machine Intelligence,* 2021, 1-1
- Anomaly detection in video via self-supervised and multi-task learning. **MARIANA-IULIANA GEORGESCU ; ANTONIO BARBALAU ; RADU TUDOR IONESCU ; FAHAD SHAHBAZ KHAN ; MARIUS POPESCU ; MUBARAK SHAH.** 2021 IEEE/CVF Conference on Computer Vision and Pattern Recognition (CVPR). IEEE, June 2021, 12737-12747
- A hybrid video anomaly detection framework via memory-augmented flow reconstruction and flow-guided frame prediction. **ZHIAN LIU ; YONG-WEI NIE ; CHENGJIANG LONG ; QING ZHANG ; GUIQING LI.** 2021 IEEE/CVF International Conference on Computer Vision (ICCV). IEEE, October 2021, 13568-13577
- **NICOLAE-CATALIN RISTEA ; NEELU MADAN ; RADU TUDOR IONESCU ; KAMAL NASROLLAHI ; FAHAD SHAHBAZ KHAN ; THOMAS B. MOESLUND ; MUBARAK SHAH.** *Self-supervised predictive convolutional attentive block for anomaly detection,* 2022, 13576-13586
- **ASHISH SINGH ; MICHAEL J JONES ; ERIK G LEARNED-MILLER.** *Eval: Explainable video anomaly localization.,* June 2023, 18717-18726